# EUROPÄISCHE PATENTSCHRIFT

(11) **EP 2 193 053 B1**
(45) Veröffentlichungstag und Bekanntmachung des Hinweises auf die Patenterteilung: **28.09.2011**
(21) Anmeldenummer: 08838022.5
(22) Anmeldetag: 01.10.2008
(51) Int. Cl.: B60R 21/264

(54) **GASGENERATOR UND VERFAHREN ZUR BEEINFLUSSUNG EINER GASSTRÖMUNG IN EINEM GASGENERATOR**
GAS GENERATOR AND METHOD FOR INFLUENCING A FLOW OF GAS IN A GAS GENERATOR
GÉNÉRATEUR DE GAZ ET PROCÉDÉ POUR INFLUENCER UN ÉCOULEMENT GAZEUX DANS UN GÉNÉRATEUR DE GAZ

(30) Priorität: 05.10.2007 DE 102007048736
(43) Veröffentlichungstag der Anmeldung: 09.06.2010
(73) Patentinhaber: Takata-Petri AG, 63743 Aschaffenburg (DE)
(72) Erfinder: ZHANG, Jiang, 57072 Siegen (DE)
(74) Vertreter: Müller, Wolfram Hubertus
(86) Internationale Anmeldenummer: PCT/EP2008/063156
(87) Internationale Veröffentlichungsnummer: WO 2009/047186

(56) Entgegenhaltungen:
- EP-A- 0 360 902
- DE-C1- 3 921 473
- FR-A- 2 876 968
- US-A- 5 738 372

## Beschreibung

Die vorliegende Erfindung betrifft einen Gasgenerator nach dem Oberbegriff des Anspruchs 1 und ein Verfahren zur Beeinflussung einer Gasströmung in einem Gasgenerator nach dem Oberbegriff des Anspruchs 8, die aus der DE 3 921 473 C1 bekannt sind.

Ein derartiger Gasgenerator eignet sich beispielsweise zum Einsatz in einem Insassenschutzsystem wie einem Airbagsystem in einem Kraftfahrzeug zur Bereitstellung eines Gases, welches zum Aufblasen eines Airbags verwendet wird. An derartige Gasgeneratoren werden Sicherheitsanforderungen gestellt, zu denen unter anderem das Bestehen des so genannten Bonfire-Tests (einer Brandprüfung) gehört. Der Gasgenerator muss dabei so konstruiert und hergestellt werden, dass er durch die Hitze eines Feuers nicht fragmentiert, das heißt, nicht auseinander bricht. Diese Sicherheitsanforderungen werden sowohl seitens der Automobilhersteller als auch seitens des Gesetzgebers für die Zulassung von Gasgeneratoren in Kraftfahrzeugen durch die Bundesanstalt für Materialforschung und -prüfung vorgeschrieben.

Für den Bonfire-Test sind drei oder vier mögliche Positionen eines Gasgenerators zu einer Flamme vorgesehen. Beispielsweise sind für einen Rohrgasgenerator vier Positionen zu testen:
1. eine Position, in der ein Zünder des Gasgenerators zur Flamme hin orientiert ist,
2. eine Position, in der der Zünder des Gasgenerators von der Flamme weg orientiert ist,
3. eine Position, in der die Gasgeneratorachse horizontal liegt und eine Beflammung des Gasgenerators in der Mitte des Gasgenerators stattfindet, und
4. eine Position, in der die Gasgeneratorachse wiederum horizontal angeordnet ist, eine Beflammung jedoch an einer vom Zünder entfernten Stelle des Gasgenerators stattfindet.

Es ist aus dem Stand der Technik bekannt, zum Lösen des so genannten Bonfire-Problems (das heißt der Beflammung des Gasgenerators unter gleichzeitiger Verhinderung der Fragmentierung desselben) ein Frühzündmittel (so genanntes auto ignition material) in Form von Tabletten oder Granulat einzusetzen. Das Frühzündmittel besitzt eine niedrigere Selbstzündtemperatur (Autoignition-Temperatur) als ein im Gasgenerator für die eigentliche Gasproduktion verantwortlicher Gassatz. So sind beispielsweise Frühzündmittel mit einer Selbstzündtemperatur von 160 °C bekannt. Üblicherweise eingesetzte pyrotechnische Gassätze sind hingegen wesentlich hitzbeständiger und weisen eine höhere Anzündtemperatur oder höhere exothermische Reaktionstemperatur als Frühzündmittel auf. So sind beispielsweise Gassätze mit einer exothermischen Reaktionstemperatur von 260 °C bekannt.

Eine Aufgabe des Frühzündmittels besteht darin, durch frühzeitige Zündung eine kontrollierte Umsetzung des eigentlichen Gassatzes herbeizuführen. Unter den Begriff "kontrollierte Umsetzung" wird eine kontrollierte und vertretbare Abbrandgeschwindigkeit des Gassatzes verstanden. Die Abbrandgeschwindigkeit des Gassatzes nimmt mit der Temperatur des Gassatzes vor Umsetzung zu. Je höher die Abbrandgeschwindigkeit des Gassatzes ist, desto höher ist der Innendruck im Gasgenerator. Wenn der Innendruck im Gasgenerator bzw. in der Brennkammer jedoch das gewöhnliche Maß übersteigt, steigt auch die Gefahr einer Fragmentierung des Gasgenerators. Dies ist insbesondere dann der Fall, wenn das Strukturmaterial des Gasgenerators durch eine starke Erhitzung sowieso geschwächt ist. So ist es aus dem Stand der Technik bekannt, dass durch eine starke Erhitzung des Strukturmaterials des Gasgenerators beim Bonfire-Test die Strukturfestigkeit dieses Strukturmaterials herabgesetzt wird. Durch eine frühzeitige Zündung des Frühzündmittels und einer damit bedingten frühzeitigen Umsetzung des eigentlichen Gassatzes bei relativ niedriger Starttemperatur wird folglich durch den damit erzielten geringeren Gasinnendruck im Gasgenerator eine auf das Strukturmaterial des Gasgenerators ausgeübte Belastung gering gehalten, so dass die Gefahr einer Fragmentierung herabgesetzt wird.

Die vorgenannten Aufgaben kann das Frühzündmittel insbesondere dann gut erfüllen, wenn bei einer Beflammung des Gasgenerators während des Bonfire-Tests die auf den Gasgenerator wirkende Hitze durch Wärmeübertragung schnell an das Frühzündmittel gelangen kann. Dies ist insbesondere dann der Fall, wenn eine günstige Testposition vorliegt, beispielsweise wenn der Zünder zur Flamme hin orientiert ist. Durch den in dieser Position geringen Abstand des Frühzündmittels zur Flamme bzw. zum Feuer kann die Selbstzündtemperatur des Frühzündmittels durch günstige Wärmeleitung schnell erreicht werden.

Bei einer ungünstigen Position während des Bonfire-Tests wie beispielsweise einer horizontalen Ausrichtung des Gasgenerators und einer Beflammung an einer Stelle des Gasgenerators, die dem Frühzündmittel bzw. Zünder abgewandt ist, kann es zu einer verspäteten Aktivierung des Frühzündmittels kommen, da ein verhältnismäßig großer Abstand zwischen der Flamme und dem Frühzündmittel einen langen Zeitraum für eine Wärmeübertragung auf das Frühzündmittel bedingt. Das heißt, in diesem Fall ist der Gassatz schon beim Anzünden verhältnismäßig heiß, so dass eine hohe Abbrandgeschwindigkeit und damit ein hoher Innendruck in der Brennkammer des Gasgenerators erreicht wird. Auch hat das Generatorgehäuse wegen der erhöhten Temperatur bereits erheblich an seiner Festigkeit verloren. Im ungünstigsten Fall kann es während dieses Teils des Bonfire-Tests zu einer Fragmentierung des Gasgenerators kommen.

Aus der US-A 5,738,372 ist ein Gasgenerator bekannt, der einen Füllanschluss aufweist, durch welchen ein Innenraum des Gasgenerators mit einem im Innenraum unter Druck vorliegenden Gas gefüllt werden kann. Nach Füllen des Innenraums kann der Füllanschluss durch eine Dichtung verschlossen werden, die bei hohen Temperaturen verformt wird oder schmilzt. Dadurch kann der Füllanschluss wieder freigegeben werden, so dass er ein Sicherheitsventil des Gasgenerators darstellt, welches bei hohen Temperaturen geöffnet wird. Das im Gasgenerator gespeicherte Gas tritt dann bei hohen Temperaturen jedoch nicht an der Gasaustrittsöffnung, sondern am Füllanschluss aus dem Gasgenerator aus.

Der vorliegenden Erfindung liegt die Aufgabe zugrunde, einen Gasgenerator bereitzustellen, der den Bonfire-Test auf besonders vorteilhafte Weise besteht.

Diese Aufgabe wird durch einen Gasgenerator mit den Merkmalen des Anspruchs 1 gelöst. Ein solcher Gasgenerator ist für ein Insassenschutzsystem, insbesondere für ein Airbagmodul in einem Kraftfahrzeug geeignet. Er weist ein Außengehäuse und ein in diesem Außengehäuse ausgebildetes Innengehäuse auf, welches zur Aufnahme einer Gasbildungssubstanz dient. Als Gasbildungssubstanz können herkömmliche pyrotechnische Gassätze verwendet werden, die beispielsweise aus einem festen, brennbaren Material bestehen, welches beim Verbrennen eine hohe Menge an Gas erzeugt. Der Innenraum des Gasgenerators ist mit einer Abströmöffnung des Gasgenerators, durch welche hindurch im Gasgenerator gebildetes Gas aus dem Gasgenerator in einen zugeordneten Airbag nach Verbrennen der Gasbildungssubstanz strömt, mittels einer Strömungsverbindung verbunden.

Erfindungsgemäß ist der Querschnitt dieser Strömungsverbindung zwischen dem Innenraum und der Abströmöffnung in Abhängigkeit der Temperatur variabel ausgestaltet.

In einer Variante wird der Querschnitt der Strömungsverbindung zwischen dem Innenraum und der Abströmöffnung vergrößert, wenn an einem Abschnitt des Innenraums eine Deformationstemperatur erreicht oder überschritten wird. Die Vergrößerung des Querschnitts der Strömungsverbindung kann beispielsweise dadurch erfolgen, dass eine zusätzliche Öffnung zur Verbindung des Innenraums mit der Abströmöffnung bereitgestellt wird.

In einer Variante der Erfindung beträgt die Deformationstemperatur ca. 250 °C, 240 °C, 230 °C, 220 °C, 210 °C, 200 °C, 190 °C, 180 °C, 170 °C, 160 °C oder 150 °C bzw. einen noch niedrigeren Wert als 150 °C. Dabei ist die Deformationstemperatur nicht zwingenderweise als exakte, auf einen genauen Wert festgelegte Temperatur zu betrachten, sondern vielmehr als eine innerhalb eines bestimmten Bereichs auftretende Temperatur. Die Deformationstemperatur stellt mithin eine Temperatur dar, an der ein Material eine Deformation erfährt.

Um eine zusätzliche Öffnung für die Strömungsverbindung zwischen dem Innenraum und der Abströmöffnung besonders einfach bereitstellen zu können, ist in einer Variante zwischen dem Innenraum und der Abströmöffnung eine mit einem Dichtungselement verschlossene Öffnung ausgebildet. Die Öffnung ist insbesondere vollständig durch das Dichtungselement verschlossen. Statt einer einzelnen Öffnung können auch mehrere Öffnungen vorgesehen sein, die von einem einzelnen Dichtungselement verschlossen sind. Ferner ist es möglich, dass bei mehreren Öffnungen jede dieser Öffnungen durch ein einzelnes Dichtungselement verschlossen ist. Auch kann ein Dichtungselement zwei oder mehr Öffnungen verschließen, wobei dennoch mehr als ein Dichtungselement vorhanden sind, um alle zu verschließenden Öffnungen zu verschließen.

In einer alternativen Ausgestaltung weist das Dichtungselement ein Material mit einer Schmelztemperatur von nicht mehr als ca. 250 °C, insbesondere nicht mehr als ca. 240 °C, 230 °C, 220 °C, 210 °C, 200°C, 190 °C, 180 °C, 170 °C, 160 °C oder 150 °C auf. Die Schmelztemperatur kann auch noch niedriger als ca. 150 °C sein. Die Schmelztemperatur des Materials ist als ein Sonderfall einer Deformationstemperatur zu verstehen. Das Material ist bei der Schmelztemperatur nicht nur deformierbar, sondern schmilzt bei dieser Temperatur. Es ist möglich, dass das Dichtungselement vollständig aus dem Material mit einer der zuvor genannten Schmelztemperaturen besteht. Bei dem Material muss es sich nicht um eine Reinsubstanz handeln, vielmehr können auch Gemische verschiedener Stoffe zur Bildung des Materials verwendet werden.

In einer Variante weist das Dichtungselement einen Kunststoff, insbesondere Polypropylen oder Polyamid auf. Polypropylen weist eine Schmelztemperatur von ca. 160 °C und Polyamid eine Schmelztemperatur von ca. 220 °C auf.

In einer weiteren Variante weist der Kunststoff Glasfasern auf. Durch die Zugabe von Glasfasern wird die Festigkeit des Kunststoffs erhöht, wobei die Schmelztemperatur des Kunststoffs im Wesentlichen nicht beeinflusst wird.

Erfindungsgemäß wird durch die Veränderung des Querschnitts der Strömungsverbindung ein zusätzlicher Strömungspfad zwischen dem Innenraum und der Abströmöffnung bereitgestellt. Dieser zusätzliche Strömungspfad kann dann von Gas, welches aus dem im Innenraum angeordneten Gassatz bei einer Verbrennung gebildet wird, zusätzlich zu dem ursprünglich vorhandenen Strömungspfad auf dem Weg vom Innenraum zur Abströmöffnung des Gasgenerators durchströmt werden.

Um eine besonders günstige Druckerniedrigung und Gasabführung aus dem Innenraum bei erhöhter Temperatur im Innenraum zu ermöglichen, ist der zusätzliche Strömungspfad erfindungsgemäß derart ausgestaltet, dass Gas, welches auf diesem zusätzlichen Strömungspfad strömt, seltener umgelenkt wird als Gas, welches auf dem ursprünglich vorhandenen Strömungspfad strömt. Das heißt, es wird eine direktere Verbindung zwischen dem Innenraum und der Abströmöffnung bereitgestellt, als dies ohne zusätzlichen Strömungspfad der Fall ist.

Die der Erfindung zugrunde liegende Aufgabe wird auch durch ein Verfahren zur Beeinflussung einer Gasströmung in einem Gasgenerator mit den Merkmalen des Anspruchs 8 gelöst. Gemäß diesem Verfahren wird ein Gasgenerator mit einem Außengehäuse, einem in dem Außengehäuse ausgebildeten Innenraum zur Aufnahme einer Gasbildungssubstanz, einer Abströmöffnung zum Abströmen eines im Innenraum gebildeten Gases aus dem Gasgenerator und einer Strömungsverbindung zwischen dem Innenraum und der Abströmöffnung bereitgestellt. Zumindest ein Teil des Querschnitts der Strömungsverbindung ist von einem Dichtungselement verschlossen. Durch eine Erhöhung der Temperatur eines solchen Bereichs des Gasgenerators, dem das Dichtungselement zugeordnet ist, bis zum Erreichen oder Überschreiten einer Deformationstemperatur wird dann durch Übertragung der Wärme auf das Dichtungselement eine Deformation desselben erreicht. Dadurch wird der Querschnitt der Strömungsverbindung verändert.

Insbesondere wird der zuvor von dem Dichtungselement verschlossene Teil des Querschnitts freigegeben. Dadurch wird ein zusätzlicher Querschnitt der Strömungsverbindung bereitgestellt.

Der Bereich des Gasgenerators, an dem die Temperatur bis zur Deformationstemperatur oder darüber hinaus erhöht wird, ist vorzugsweise ein Abschnitt des Innenraums, an dem das Dichtungselement zum Verschließen eines Teils des Querschnitts der Strömungsverbindung angeordnet ist. Eine direkte Temperatureinwirkung von außen auf den Innenraum kann jedoch auch an einem anderen Bereich des Gasgenerators oder Abschnitt des Innenraums erfolgen, wobei dann eine Wärmeleitung zu einer entsprechenden Temperaturerhöhung an dem Bereich des Gasgenerators oder dem Abschnitt des Innenraums, an dem das Dichtungselement vorgesehen ist, erreicht wird.

Dieses Verfahren zur Veränderung des Querschnitts ist insbesondere in einem Gasgenerator der oben beschriebenen Art vorteilhaft einzusetzen. Die in den Unteransprüchen zum Gasgenerator aufgeführten Merkmale sind insofern auch in Varianten und alternativen Ausgestaltungen des vorliegenden Verfahrens einsetzbar, so dass auf die diesbezüglichen obigen Erläuterungen verwiesen wird. Ferner sind die Erläuterungen zum Verfahren auf den beanspruchten Gasgenerator anwendbar.

Weitere Ausgestaltungen und Einzelheiten der vorliegenden Erfindung sollen anhand nachfolgend beschriebener Zeichnungen näher erläutert werden. Es zeigen:
- Fig. 1: einen Querschnitt durch ein erstes Ausführungsbeispiels eines Gasgenerators;
- Fig. 2: einen Querschnitt durch ein zweites Ausführungsbeispiel eines Gasgenerators;
- Fig. 3: eine schematische Ansicht einer Testposition beim Bonfire-Test;
- Fig. 4a: mögliche Strömungswege von Gas aus dem Gasgenerator der Figur 1 bei geschlossenem Überhitzungsventil und
- Fig. 4b: mögliche Strömungswege von Gas aus dem Gasgenerator der Figur 1 bei geöffnetem Überhitzungsventil.

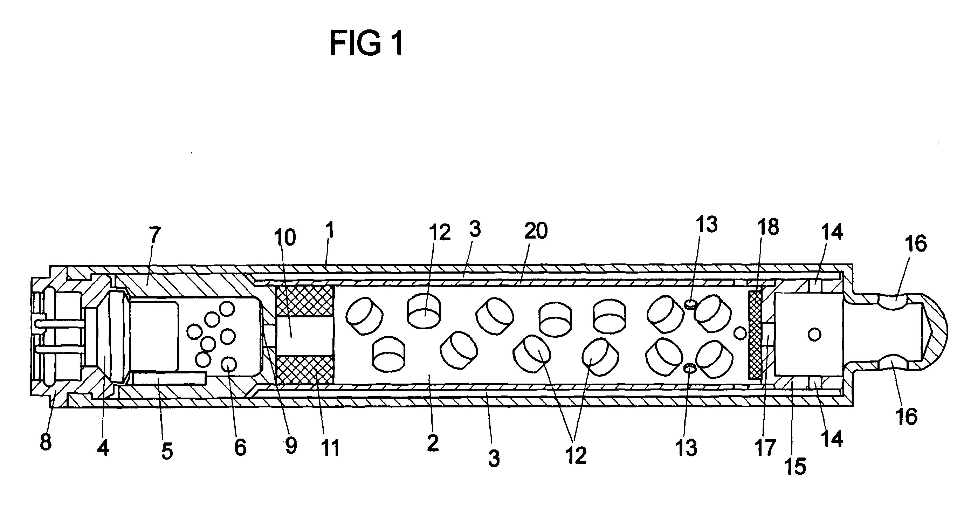

Die Figur 1 zeigt einen Querschnitt durch einen Gasgenerator mit einem Außengehäuse 1, einer im Außengehäuse 1 als Innenraum angeordneten Brennkammer 2 und einem zwischen dem Außengehäuse 1 und der Brennkammer 2 ausgebildeten Plenum 3, durch welches in der Brennkammer 2 gebildetes Gas strömen kann.

Innerhalb des Außengehäuses 1 sind ferner auf der in der Figur 1 links dargestellten Seite des Gasgenerators ein elektrischer Zünder 4, ein Frühzündmittel 5 und eine Verstärkungsladung 6 vorgesehen. Die Verstärkungsladung 6 wird auch als Booster-Ladung bezeichnet. Der Zünder 4, das Frühzündmittel 5 und die Verstärkungsladung 6 sind zusammen in einem Verstärkungsnapf 7 angeordnet, der zumindest teilweise ohne einem dem Plenum 3 vergleichbaren Zwischenraum im Außengehäuse 1 angeordnet ist. Der Zünder 4 ragt dabei in den Verstärkungsnapf hinein, wird seinerseits jedoch selbst durch eine Anzünderaufnahme 8 gehalten. Der Zünder 4 ist in herkömmlicher Weise über ein elektrisches Verbindungskabel mit einer elektrischen Spannungsquelle zu verbinden und von dieser im Auslösungsfall auszulösen.

Das Innere des Verstärkungsnapfes 7, in dem sich die Verstärkungsladung 6 und die Frühzündmittel 5 befinden, ist mit durch ein folien- oder membranartiges Verschlusselement 9 von einem Strömungskanal 10 getrennt, mittels dessen nach Zerstören des Verschlusselementes 9 eine Verbindung zwischen der Brennkammer 2 und dem Inneren des Verstärkungsnapfes 7 hergestellt wird.

An der dem Verstärkungsnapf 7 zugewandten Seite der Brennkammer 2 ist zudem ein Volumenausgleichsmittel 11 in Form eines elastischen Metallfaservlieses angeordnet. Dieses Volumenausgleichsmittel 11 sorgt dafür, dass ein in Form von Tabletten oder Granulat vorliegender pyrotechnischer Gassatz 12 derart in der Brennkammer 2 gehalten wird, dass bei einer Bewegung des Gasgenerators keine Klappergeräusche vom Gassatz 12 hervorgerufen werden. Der Gassatz 12 stellt ein Gasbildungsmittel dar. Aus Gründen der Übersichtlichkeit sind nicht alle den Gassatz 12 darstellenden Tabletten bzw. Partikel mit dem entsprechenden Bezugszeichen versehen.

Die Brennkammer 2, welches zylindrisch ausgebildet ist, weist an ihrer Umfangsoberfläche erste Öffnungen 13 auf, die als Durchbrüche oder Löcher ausgestaltet sind und eine Verbindung zwischen dem Inneren der Brennkammer 2 und dem Plenum 3 herstellen. Aus Gründen der Übersichtlichkeit sind in der Darstellung der Figur 1 nur einige wenige Öffnungen 13 grafisch dargestellt. Das Plenum 3 ist über zweite Öffnungen 14 mit dem Inneren eines hohl ausgebildeten Umlenkelementes 15 verbunden, so dass Gas, welches sich im Plenum 3 befindet, durch die zweiten Öffnungen 14 in das Umlenkelement 15 gelangen kann. Aus dem Umlenkelement 15 kann Gas schließlich über Austrittsöffnungen 16 aus dem Gasgenerator austreten und einen dem Gasgenerator zugeordneten Airbag füllen.

An der der Brennkammer 2 zugewandten Seite des Umlenkelementes 15 ist eine weitere Öffnung 17 ausgebildet, die durch eine Scheibe 18 verschlossen ist. Die Scheibe 18 stellt ein Dichtungselement dar und ist in diesem Ausführungsbeispiel auf die der Brennkammer 2 zugewandte Außenseite des Umlenkelements 15 aufgeklebt. Die der Brennkammer 2 zugewandte Seite des Umlenkelements 15 stellt einen Abschnitt der Brennkammer 2 dar. Die Scheibe 18 ist aus einem Kunststoff gefertigt, der eine Schmelztemperatur aufweist, die deutlich niedriger als die Schmelztemperatur von Stahl (1540 °C) ist und beispielsweise bei ca. 130 bis 260 °C liegen kann.

Die weitere Öffnung 17 und die Scheibe 18 bilden zusammen ein durch Hitze aktivierbares Ventil bzw. ein Überhitzungsventil. Wird beispielsweise beim Bonfire-Test das Außengehäuse 1 des Gasgenerators durch eine Flamme erhitzt, so überträgt sich die von der Flamme auf den Gasgenerator wirkende Wärme vom Außengehäuse 1 über das Umlenkelement 15 auf die Außenwand 20 der Brennkammer 2. Dadurch erwärmt sich der in der Brennkammer 2 vorhandene Gassatz 12 ebenso wie die am Umlenkelement 15 ausgebildete Scheibe 18. Bei steigender Temperatur wird schließlich eine Deformationstemperatur der Scheibe 18 erreicht. Bei dieser Deformationstemperatur beginnt das Material, aus dem die Scheibe 18 besteht, weich zu werden und sich zu deformieren. In einem solchen geschwächten Zustand der Scheibe 18 genügt bereits ein geringer Überdruck in der Brennkammer 2, um die Scheibe 18 zum Bersten zu bringen. Die darunter liegende weitere Öffnung 17 wird dadurch freigesetzt, so dass in der Brennkammer 2 entstehendes Gas durch die weitere Öffnung 17 in das Umlenkelement 15 strömen kann. Der durch die ersten Öffnungen 13, das Plenum 3 und die zweiten Öffnungen 14 von der Brennkammer 2 in das Umlenkelement 15 ursprünglich vorhandene Strömungspfad bleibt weiterhin aufrechterhalten.

Findet eine Erwärmung des Gasgenerators und damit des Umlenkelements 15 und der Scheibe 18 statt, so kann auch die Schmelztemperatur der Scheibe 18 erreicht werden. In diesem Fall schmilzt die Scheibe 18 und gibt die weitere Öffnung 17 bereits frei, ohne dass ein geringer Überdruck in der Brennkammer 2 herrschen muss. In einem solchen Fall kann in der Brennkammer 2 gebildetes Gas gleich von Anfang an zusätzlich zu dem Strömungspfad durch die ersten Öffnungen 13, das Plenum 3 und die zweiten Öffnungen 14 auch durch die weitere Öffnung 17 in das Umlenkelement 15 und von dort durch die Abströmöffnungen 16 in einen zugeordneten Airbag strömen.

Wird der Gasgenerator nicht bis zur Deformations- oder Schmelztemperatur der Scheibe 18 erhitzt, so bleibt die Scheibe 18 intakt und die weitere Öffnung 17 verschlossen. Der zusätzliche Strömungspfad von der Brennkammer 2 durch die weitere Öffnung 17 in das Umlenkelement 15 und von dort durch die Abströmöffnungen 16 aus dem Gasgenerator heraus ist in diesem Fall nicht zugänglich.

Das heißt, durch die Wahl des Materials der Scheibe 18 ist eine temperaturabhängige Öffnung des aus der Scheibe 18 und der weiteren Öffnung 17 gebildeten Überhitzungsventils möglich. So ist es möglich, dass bei einer nur kurzzeitigen Erhitzung des Gasgenerators die weitere Öffnung 17 nicht freigeben wird und in der Brennkammer 2 gebildetes Gas nur durch die ersten Öffnungen 13, das Plenum 3 und die zweiten Öffnungen 14 in das Umlenkelement 15 strömen kann.

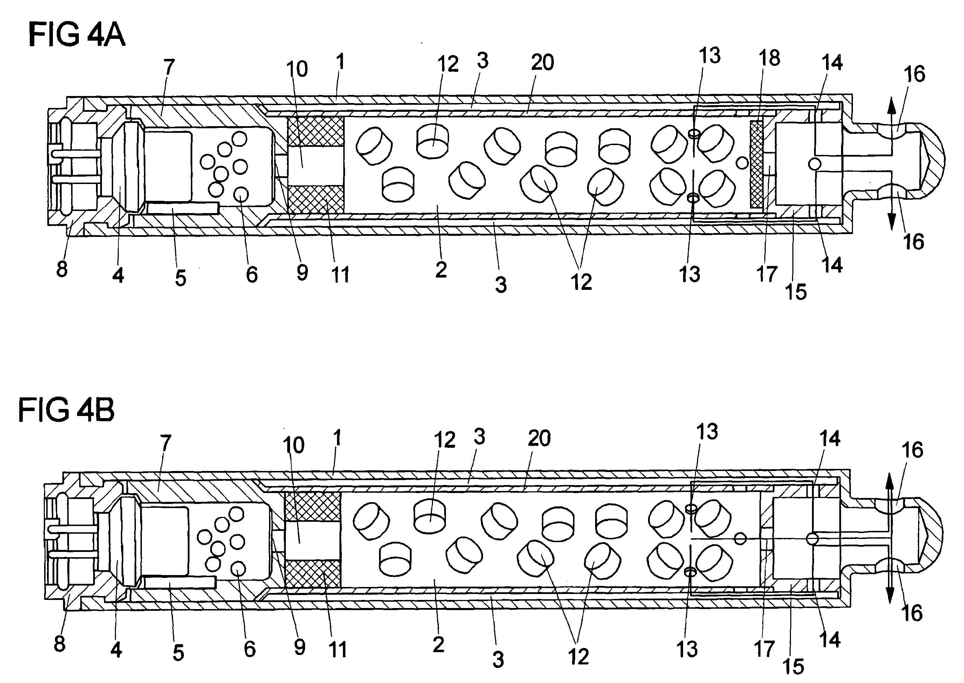

Eine solche Gasströmung aus der Brennkammer 2 in das Umlenkelement 15 ist bei einem normalen Betrieb des Airbags erwünscht und mittels des in der Figur 1 dargestellten Gasgenerators auch möglich (vgl. hierzu auch die Figur 4A). So wird bei einer durch beispielsweise einen Verkehrsunfall verursachten Airbagauslösung zunächst der Zünder 4 durch Anlegung einer Spannung aktiviert. Der Zünder 4 zündet das Frühzündmittel 5 und die Verstärkungsladung 6. Dadurch entstehen heiße Brenngase im Verbrennungsnapf 7, die einen erhöhten Druck im Verbrennungsnapf 7 verursachen. Durch diesen erhöhten Druck wird das Verschlusselement 9 zerstört, so dass die heißen Brenngase durch den Strömungskanal 10 in die Brennkammer 2 strömen können. Die hohe Temperatur der Brenngase erzeugt dabei in der Brennkammer 2 eine Umsetzung des Gassatzes 12, wodurch eine große Menge Gas erzeugt wird. Dieses Gas strömt dann durch die ersten Öffnungen 13 in das Plenum 3 und von dort durch die zweiten Öffnungen 14 in das Umlenkelement 15. Dabei wird das Gas sowohl beim Strömen in das Plenum 3 hinein als auch beim Strömen aus dem Plenum 3 heraus durch die zweiten Öffnungen 14 in das Umlenkelement 15 hinein umgelenkt - das Gas erfährt zumindest zwei Richtungsänderungen. In dem Umlenkelement 15 wird das Gas zudem weiter in Richtung der Abströmöffnungen 16 gelenkt, um durch diese hindurch aus dem Gasgenerator hinaus in einen zugeordneten Airbag hineinzuströmen.

Wird durch eine Erwärmung des Gasgenerators beispielsweise beim Bonfire-Test das Umlenkelement 15 oder das Innere der Brennkammer 2 bereits so stark erwärmt, dass die Scheibe 18 schmilzt, wird die Öffnung 17 freigegeben. Wird der Gassatz 12 nun durch Selbstentzündung infolge hoher Temperatur oder durch Einströmen heißer Gase aus dem Verstärkungsnapf 7 entsprechend der obigen Darstellung gezündet, können entstehende Gase unmittelbar auch durch die weitere Öffnung 17 in das Umlenkelement 15 strömen. Dabei erfahren diese Gase keine Richtungsänderung, bis sie aus dem Umlenkelement 15 durch die Abströmöffnungen 16 hinaus in einen zugeordneten Gassack geleitet werden.

Dadurch sind deutlich höhere Gasabströmgeschwindigkeiten durch die weitere Öffnung 17 im Vergleich mit einer Strömung durch die ersten Öffnungen 13, das Plenum 3 und die weiteren Öffnungen 14 in das Umlenkelement 15 möglich. Ein sich in der Brennkammer 2 infolge erhöhter Temperatur und damit einhergehender erhöhter Abbrandgeschwindigkeit des Gassatzes 12 schnell ausbildender erhöhter Innendruck kann folglich leichter abgebaut werden. Kritische Drücke, welche eine Fragmentierung des Gasgenerators bewirken könnten, werden nicht gebildet.

Durch eine Verwendung eines aus der Scheibe 18 und der weiteren Öffnung 17 gebildeten Überhitzungsventils wird der Einsatz eines weiteren Frühzündmittels in den Abströmöffnungen 16 zugewandten Bereich der Brennkammer 2 hinfällig. Ein solches Vorsehen eines weiteren Frühzündmittels in diesem Bereich könnte ebenfalls verhindern, dass die Temperatur in der Brennkammer 2 vor einer Zündung des Gassatzes 12 auf Temperaturen ansteigt, bei denen eine Umsetzung des Gassatzes 12 bereits zu einer sehr hohen Abbrandgeschwindigkeit führt. Ferner ist es beim Ausführungsbeispiel der Figur 1 nicht notwendig, das Außengehäuse 1 des Gasgenerators bzw. anderer Elemente des Gasgenerators aus einem sehr festen und hitzebeständigen Stahl herzustellen. Auch reicht es bei der vorliegend dargestellten Ausführungsform aus, das Umlenkelement 15 mit der Außenwandung 20 der Brennkammer 2 mittels einer Steckverbindung durch Ineinanderpressen zu verbinden; eine zusätzliche Verschweißung zur Erhöhung der Festigkeit zwischen diesen Elementen des Gasgenerators ist nicht notwendig.

Um die Integrität der Scheibe 18 bei einer normalen Funktion des Gasgenerators zu gewährleisten, ist die Scheibe 18 aus einem entsprechend festen oder verstärkten Kunststoff hergestellt bzw. weist eine ausreichende Dimensionierung der Scheibendicke auf. Dies führt dazu, dass bei einer gewöhnlichen Umsetzung des Brennsatzes 12 in der Brennkammer 2, welche in der Regel weniger als 50 ms dauert, die Scheibe 18 nicht derart erwärmt wird, dass die Deformationstemperatur der Scheibe 18 erreicht wird. Ebenfalls führt die ausgewählte Dimensionierung der Scheibe 18 dazu, dass der in der Brennkammer 2 entstehende Druck von der Scheibe 18 ausgehalten wird. Das heißt, die weitere Öffnung 17 bleibt üblicherweise verschlossen, so dass in der Brennkammer 2 gebildetes Gas nur durch die ersten Öffnungen 13 aus der Brennkammer 2 entweichen kann.

Beim Bonfire-Test wird der Gasgenerator in der Regel mehrere Minuten lang durch die entsprechende Flamme erhitzt, so dass eine Erwärmung der Scheibe 18 über die Deformations- bzw. Schmelztemperatur hinaus erreicht werden kann. Beim Bonfire-Test breitet sich die von einer Flamme auf den Gasgenerator übertragene Wärme von der Stelle, auf die die Flamme auf den Gasgenerator trifft, durch die aus Stahl bestehenden Bauteile des Gasgenerators wie Außengehäuse 1, Umlenkelement 15 und Außenwandung 20 der Brennkammer 2 im Gasgenerator aus. Das Umlenkelement 15 erreicht dabei Temperaturen von 200 °C, 300 °C und sogar mehr als 400 °C. Die auf die dem Umlenkelement 15 angebrachte Scheibe 18 erhitzt sich dementsprechend und beginnt bei Erreichen der Deformationstemperatur weich zu werden und sich zu verformen und beim Erreichen der Schmelztemperatur in den flüssigen Aggregatzustand überzugehen. Durch dieses Schmelzen wird die weitere Öffnung 17 freigelegt.

Wenn die Zündtemperatur des Frühzündmittels 5 (beispielsweise 160 °C) im Verstärkungsnapf 7 erreicht wird, zündet das Frühzündmittel 5 und zündet seinerseits den Verstärkungssatz 6. Die dabei entstehenden heißen Gase zünden ihrerseits den Gassatz 12. Die in der Brennkammer 2 gebildeten Gase strömen zum größten Teil durch die weitere Öffnung 17 in das Umlenkelement 15 und von dort durch die Abströmöffnungen 16 in den zugeordneten Gassack. Ein kleinerer Anteil der gebildeten Gase strömt aus der Brennkammer 2 durch die ersten Öffnungen 13, das Plenum 3 und die zweiten Öffnungen 14 in das Umlenkelement 15 und von dort die Abströmöffnungen 16 in den zugeordneten Gassack.

Das Vorsehen eines durch Hitze aktivierbaren Ventils (Überhitzungsventils) gebildet aus der Scheibe 18 und der weiteren Öffnung 17 ist insbesondere für Rohrgasgeneratoren mit einem großen Verhältnis zwischen Länge und Durchmesser bei bestimmten Bonfire-Testpositionen von Vorteil. Das Überhitzungsventil kann durch ein einfaches Design bewerkstelligt werden und hat zudem keinen Einfluss auf die Leistungscharakteristik des Gasgenerators bei normaler Funktion. Dadurch, dass das Überhitzungsventil nur einen kleinen Raum in Anspruch nimmt, wird eine kompakte Bauweise des Gasgenerators trotz Vorsehen eines Überhitzungsventils gewährleistet. Gegenüber einer alternativen Lösung des Bonfire-Problems durch das Vorsehen einer zusätzlichen Frühzündmittelladung wird eine weitaus kostengünstigere Herstellung erreicht.

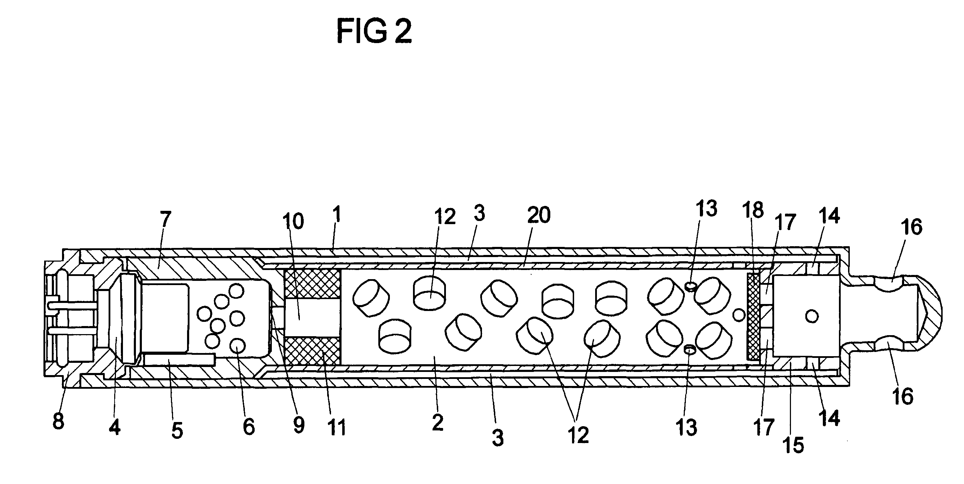

Die Figur 2 zeigt einen Querschnitt durch ein weiteres Ausführungsbeispiel eines Gasgenerators. Dieser Gasgenerator weist die gleichen Elemente wie der in der Figur 1 dargestellte Gasgenerator auf, so dass auf die obigen Erläuterungen verwiesen wird. Für gleiche Elemente werden gleiche Bezugszeichen verwendet.

Im Unterschied zum Gasgenerator der Figur 1 weist der Gasgenerator der Figur 2 jedoch zwei weitere Öffnungen 17 auf, die gegenüber der Brennkammer 2 mittels einer gemeinsamen Scheibe 18 abgedichtet werden. Kommt es zum Schmelzen der Scheibe 18, so werden gleichzeitig zwei Öffnungen zwischen der Brennkammer 2 und dem Inneren des Umlenkelements 15 frei, so dass in der Brennkammer 2 gebildetes Gas noch schneller aus der Brennkammer 2 durch das Umlenkelement 15 und die Abströmöffnungen 16 zum Gasgenerator strömen kann.

Die Anzahl der weiteren Öffnungen 17 ist prinzipiell nicht begrenzt. Es können demnach auch mehr als zwei weitere Öffnungen 17 vorgesehen sein. Es ist denkbar, verschiedene Scheiben 18 für verschiedene weitere Öffnungen 17 vorzusehen, wobei die verschiedenen Scheiben 18 aus unterschiedlichem Material gefertigt werden können, das einen unterschiedlichen Schmelzpunkt aufweist. Auf diese Weise ist es möglich, den Querschnitt der Strömungsverbindung zwischen der Brennkammer 2 und dem Umlenkelement 15 in Abhängigkeit der Temperatur des Gasgenerators zu variieren. Je höher die Temperatur dabei steigt, desto mehr Scheiben 18 schmelzen und desto mehr Öffnungen 17 werden freigegeben. Das heißt, wenn eine besonders hohe Innentemperatur in der Brennkammer 2 herrscht, die eine hohe Abbrandgeschwindigkeit und damit einen hohen Innendruck in der Brennkammer 2 bewirkt, steht grundsätzlich ein größerer Querschnitt der Strömungsverbindung zwischen der Brennkammer 2 und dem Umlenkelement 15 bzw. den Abströmöffnungen 16 zur Verfügung.

Wird ein solch großer Querschnitt gar nicht benötigt, weil die Temperatur in der Brennkammer 2 niedriger liegt, wird dem dadurch Rechnung getragen, dass bei niedrigerer Temperatur des Gasgenerators noch nicht alle Scheiben 18 geschmolzen sind und folglich noch nicht alle weitere Öffnungen 17 zwischen der Brennkammer 2 und dem Umlenkelement 15 freigegeben sind.

Ebenso ist es möglich, nur eine Scheibe 18 vorzusehen, die jedoch unterschiedlich deformierbare bzw. schmelzbare Bereiche aufweist, so dass unter der Scheibe 18 liegende weitere Durchbrüche 17 ebenfalls in Abhängigkeit der Temperatur des Gasgenerators freigegeben werden.

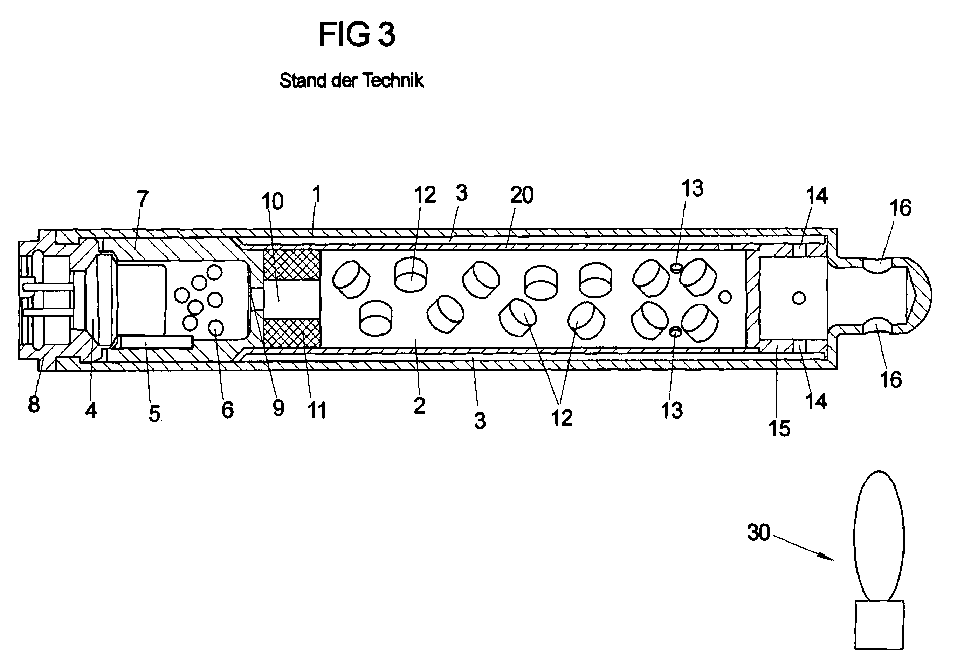

Die Figur 3 zeigt einen Querschnitt durch einen Gasgenerator herkömmlicher Bauart, der gerade in einer ungünstigen Bonfire-Testposition dem Bonfire-Test unterzogen wird. Hinsichtlich der einzelnen Elemente des Gasgenerators wird auf die obigen Ausführungen verwiesen. Dieser herkömmliche Gasgenerator weist dabei zahlreiche Elemente auf, die ähnlich zu den Gasgeneratoren der Figur 1 und 2 sind. Allerdings weist der Gasgenerator der Figur 3 kein Überhitzungsventil auf.

Die Flamme 30 eines Brenners ist in der vorliegenden Bonfire-Testposition auf den Bereich des Gasgenerators gerichtet, in dem sich die Abströmöffnungen 16 befinden. Dieser Bereich ist dem Bereich, an dem das Frühzündmittel 5 angeordnet ist, abgewandt. Das heißt, bei Nichtvorsehen eines Überhitzungsventils muss sich zunächst die Hitze der Flamme 30 über das Außengehäuse 1 bzw. die Metallteile des Umlenkelements 15 und der Außenwand 20 der Brennkammer 2 hin zum Verstärkungsnapf 7 ausbreiten, um dort für eine Temperaturerhöhung zu sorgen, die ausreichend ist, um die Anzündtemperatur des Frühzündmittels 5 zu erreichen.

Da diese Wärmeleitung sehr viel Zeit in Anspruch nehmen kann, kann sich das Innere der Brennkammer 2 entsprechend erwärmen. Bis es zur Auslösung des Frühzündmittels 5 und der Verstärkungsladung 6 kommt und der Brennsatz 12 durch die dabei entstehenden heißen Gase entzündet wird, ist die Temperatur in der Brennkammer 2 mitunter schon so hoch, dass die Abbrandgeschwindigkeit des Gassatzes 12 so hoch ist, dass ein Druck entsteht, der den Gasgenerator zum Auseinanderbrechen (Fragmentieren) bringt. Dabei ist zu berücksichtigen, dass durch die Erwärmung durch die Flamme 30 bereits eine Schwächung des Außengehäuses 1, des Umlenkelements 15 und/oder der Außenwandung 20 der Brennkammer 2 stattgefunden haben kann.

Die Figur 4a zeigt den Gasgenerator der Figur 1 in Querschnittsansicht, wobei mögliche Strömungswege auf bereitgestellten Strömungspfaden bzw. Strömungsverbindungen des in der Brennkammer 2 durch Umsetzung des Gassatzes 12 gebildeten Gases durch Pfeile eingezeichnet sind. Sofern das Überhitzungsventil geschlossen ist, das heißt, sofern die Scheibe 18 intakt ist und die weitere Öffnung 17 verschlossen bleibt, kann das Gas nur durch die ersten Öffnungen 13 in das Plenum 3 und von diesem durch die zweiten Öffnungen 14 in das Umlenkelement 15 und von diesem durch die Abströmöffnungen 16 in einen zugeordneten Gassack strömen. Bei dieser Strömung kommt es zu einer ersten Umlenkung des Gasstromes beim Eintreten in das Plenum 3, zu einer zweiten Umlenkung beim Austreten aus dem Plenum 3 in das Umlenkelement 15 und schließlich zu einer weiteren Umlenkung bzw. Richtungsänderung in dem Umlenkelement 15 auf dem Weg zu den Abströmöffnungen 16 und zu einer letzten Richtungsänderung bzw. Umlenkung des Gasstromes beim Verlassen des Umlenkelements 15 durch die Abströmöffnungen 16.

Wenn das Überhitzungsventil, wie oben geschildert, geöffnet ist, steht einem in der Brennkammer 2 gebildeten Gas ein zusätzlicher Strömungsweg bzw. -pfad durch die nunmehr frei zugängliche weitere Öffnung 17 in das Umlenkelement 15 zur Verfügung. Dadurch ist der Querschnitt der Strömungsverbindung zwischen der Brennkammer 2 und den Abströmöffnungen 16 vergrößert. Da bei diesem zusätzlichen Strömungspfad wesentlich weniger Richtungsänderungen des Gasstromes erforderlich sind, das heißt, dieser Gasstrom deutlich seltener umgelenkt wird (nämlich nur ein einziges Mal beim Verlassen des Umlenkelements 15 durch die Abströmöffnungen 16 zu einem zugeordneten Gassack, bietet der durch das Öffnen des Überhitzungsventils bereitgestellte zusätzliche Strömungspfad weniger Widerstand als dies die ursprünglich im Gasgenerator vorhandenen Strömungspfade durch das Plenum 3 tun.

Dies bewirkt, dass ein größerer Anteil des in der Brennkammer 2 gebildeten Gases durch die weitere Öffnung 17 die Brennkammer 2 verlässt als durch die ersten Öffnungen 13, das Plenum 3 und die zweiten Öffnungen 14. Es ist dem Fachmann bei der Betrachtung der Figuren 4a und 4b unmittelbar ersichtlich, dass die dort eingezeichneten Strömungspfade nur schematisch zu verstehen sind und das in der Brennkammer 2 gebildete Gas die Brennkammer 2 zum Umlenkelement 15 hin und das Umlenkelement 15 durch die Abströmöffnungen 16 nur in idealisierter Weise auf den in den Figuren 4a und 4b eingezeichneten Strömungspfaden verlässt. Tatsächlich kommt es zu Verwirbelungen des Gasstromes, die jedoch der Einfachheit halber vorliegend außer Betracht bleiben.

### Bezugszeichenliste

- 1: Außengehäuse
- 2: Brennkammer
- 3: Plenum
- 4: Zünder
- 5: Frühzündmittel
- 6: Verstärkungsladung
- 7: Verstärkungsnapf
- 8: Zünderaufnahme
- 9: Verschlusselement
- 10: Strömungskanal
- 11: Volumenausgleichselement
- 12: Gassatz
- 13: erste Öffnung
- 14: zweite Öffnung
- 15: Umlenkelement
- 16: Abströmöffnung
- 17: weitere Öffnung
- 18: Scheibe
- 20: Außenwand der Brennkammer
- 30: Flamme

## Patentansprüche

1. Gasgenerator für ein Insassenschutzsystem, insbesondere für ein Airbagmodul in einem Kraftfahrzeug, mit
• einem Außengehäuse (1),
• einem in dem Außengehäuse (1) ausgebildeten Innenraum (2) zur Aufnahme einer Gasbildungssubstanz (12),
• einer Abströmöffnung (16) zum Abströmen eines im Innenraum (2) gebildeten Gases aus dem Gasgenerator und
• einer Strömungsverbindung zwischen dem Innenraum (2) und der Abströmöffnung (16),
• wobei der Querschnitt der Strömungsverbindung zwischen dem Innenraum (2) und der Abströmöffnung (16) temperaturabhängig variabel ausgestaltet ist, und
• wobei durch die Veränderung des Querschnitts der Strömungsverbindung ein zusätzlicher Strömungspfad zwischen dem Innenraum (2) und der Abströmöffnung (16) bereitgestellt wird.
**dadurch gekennzeichnet,**
**dass** der zusätzliche Strömungspfad derart ausgebildet ist, dass Gas, welches zur Abströmöffnung (16) auf dem zusätzlichen Strömungspfad strömt, eine geringere Anzahl von Richtungsänderungen erfährt als Gas, welches auf einem vor der Veränderung des Querschnitts bestehenden Strömungspfad strömt.

2. Gasgenerator nach Anspruch 1, **dadurch gekennzeichnet, dass** sich der Querschnitt der Strömungsverbindung zwischen dem Innenraum (2) und der Abströmöffnung (16) vergrößert, wenn an einem Abschnitt des Innenraums (2) eine Deformationstemperatur erreicht oder überschritten wird.

3. Gasgenerator nach Anspruch 2, **dadurch gekennzeichnet, dass** die Deformationstemperatur 250 °C oder weniger beträgt.

4. Gasgenerator nach einem der vorherigen Ansprüche, **dadurch gekennzeichnet, dass** zwischen dem Innenraum (2) und der Abströmöffnung (16) eine mit einem Dichtungselement (18) verschlossene Öffnung ausgebildet ist.

5. Gasgenerator nach Anspruch 4, **dadurch gekennzeichnet, dass** das Dichtungselement (18) ein Material mit einer Schmelztemperatur von nicht mehr als 250 °C aufweist.

6. Gasgenerator nach Anspruch 4 oder 5, **dadurch gekennzeichnet, dass** das Dichtungselement (18) einen Kunststoff, insbesondere Polypropylen oder Polyamid, aufweist.

7. Gasgenerator nach Anspruch 6, **dadurch gekennzeichnet, dass** der Kunststoff Glasfasern aufweist.

8. Verfahren zur Beeinflussung einer Gasströmung in einem Gasgenerator mit den folgenden Schritten:
• Bereitstellen eines Gasgenerators mit einem Außengehäuse (1), einem in dem Außengehäuse (1) ausgebildeten Innenraum (2) zur Aufnahme einer Gasbildungssubstanz (12), einer Abströmöffnung (16) zum Abströmen eines im Innenraum (2) gebildeten Gases aus dem Gasgenerator und einer Strömungsverbindung zwischen dem Innenraum (2) und der Abströmöffnung (16), wobei zumindest ein Teil des Querschnitts der Strömungsverbindung von einem Dichtungselement (18) verschlossen ist, und
• Erhöhen der Temperatur eines Bereichs des Gasgenerators, dem das Dichtungselement (18) zugeordnet ist, bis eine Deformationstemperatur erreicht oder überschritten ist, wodurch sich der Querschnitt der Strömungsverbindung verändert.
• wobei der Querschnitt der Strömungsverbindung infolge der Erhöhung der Temperatur vergrößert wird,
• wobei durch die Veränderung des Querschnitts der Strömungsverbindung ein zusätzlicher Strömungspfad zwischen dem Innenraum (2) und der Abströmöffnung (16) bereitgestellt wird, **dadurch gekennzeichnet,**
• **dass** der zusätzliche Strömungspfad derart ausgebildet ist, dass Gas, welches zur Abströmöffnung (16) auf dem zusätzlichen Strömungspfad strömt, eine geringere Anzahl von Richtungsänderungen erfährt als Gas, welches auf einem vor der Veränderung des Querschnitts bestehenden Strömungspfad strömt.

## Claims

1. Gas generator for an occupant protection system, particularly for an airbag module in a motor vehicle, comprising
• an outer housing (1),
• an interior space (2) formed in the outer housing (1) for containing a gas generating substance (12),
• an outflow opening (16) for discharging gas generated in the interior space (2) out of the gas generator, and
• a flow connection between the interior space (2) and the outflow opening (16), wherein
• the cross section of the flow connection between the interior space (2) and the outflow opening (16) is designed to be temperature-dependently variable, and wherein
• by changing the cross section of the flow connection, an additional flow path between the interior space (2) and the outflow opening (16) is provided,
**characterized in that**,
the additional flow path is designed such that gas flowing towards the outflow opening (16) through the additional flow path experiences a smaller number of changes of direction than gas flowing through a flow path existing before the change of the cross section.

2. Gas generator according to claim 1, **characterized in that** the cross section of the flow connection between the interior space (2) and the outflow opening (16) is enlarged when a deformation temperature is reached or exceeded at a portion of the interior space (2).

3. Gas generator according to claim 2, **characterized in that that** the deformation temperature amounts to 250 °C or less.

4. Gas generator according to one of the preceding claims, **characterized in that** an opening closed with a sealing element (18) is formed between the interior space (2) and the outflow opening (16).

5. Gas generator according to claim 4, **characterized in that** the sealing element (18) comprises a material having a melting temperature of not less than 250 °C.

6. Gas generator according to claim 4 or 5, **characterized in that** the sealing element (18) comprises a synthetic material, particularly polypropylene or polyamide.

7. Gas generator according to claim 6, **characterized in that** the plastic comprises fiber glass.

8. Method for influencing a gas flow in a gas generator comprising the following steps:
• Providing a gas generator having an outer housing (1), an interior space formed in the outer housing (1) for containing a gas generating substance (12), an outflow opening (16) for discharging gas generated in the interior space out of the gas generator, and a flow connection between the interior space (2) and the outflow opening (16), wherein at least a part of the cross section of the flow connection is closed with a sealing element (18), and
• Increasing the temperature of a region of the gas generator, to which region the sealing element (18) is associated, until a deformation temperature is reached or exceeded, whereby the cross section of the flow connection changes, wherein
• the cross section of the flow connection is enlarged due to the increase of the temperature, wherein
• by changing the cross section of the flow connection, an additional flow path between the interior space (2) and the outflow opening (16) is provided,
**characterized in that**
the additional flow path is designed such that gas flowing towards the outflow opening (16) through the additional flow path experiences a smaller number of changes of direction than gas flowing through a flow path existing before the change of the cross section.

## Revendications

1. Générateur de gaz pour un système de protection de passagers, en particulier pour un module d'airbag dans un véhicule automobile, comprenant
- un boîtier extérieur (1),
- une chambre intérieure (2) réalisée dans le boîtier extérieur (1) pour recevoir une substance de formation de gaz (12),
- une ouverture de sortie (16) pour l'écoulement sortant d'un gaz formé dans la chambre intérieure (2) hors du générateur de gaz, et
- une liaison d'écoulement entre la chambre intérieure (2) et l'ouverture de sortie (16),
- dans lequel la section transversale de la liaison d'écoulement entre la chambre intérieure (2) et l'ouverture de sortie (16) est conçue de façon à varier en fonction de la température, et
- dans lequel la variation de la section transversale de la liaison d'écoulement entraîne la création d'un trajet d'écoulement supplémentaire entre la chambre intérieure (2) et l'ouverture de sortie (16),
**caractérisé en ce que**
le trajet d'écoulement supplémentaire est réalisé de telle façon que le gaz qui s'écoule vers l'ouverture de sortie (16) sur le trajet d'écoulement supplémentaire subit un nombre de changements de direction plus faible que le gaz qui s'écoule sur un trajet d'écoulement existant avant la variation de la section transversale.

2. Générateur de gaz selon la revendication 1, **caractérisé en ce que** la section transversale de la liaison d'écoulement entre la chambre intérieure (2) et l'ouverture de sortie (16) s'agrandit lorsqu'on atteint ou qu'on dépasse une température de déformation au niveau d'une portion de la chambre intérieure (2).

3. Générateur de gaz selon la revendication 2, **caractérisé en ce que** la température de déformation est égale ou inférieure à 250° C.

4. Générateur de gaz selon l'une des revendications précédentes, **caractérisé en ce qu'**une ouverture obturée par un élément d'étanchéité (18) est réalisée entre la chambre intérieure (2) et l'ouverture de sortie (16).

5. Générateur de gaz selon la revendication 4, **caractérisé en ce que** l'élément d'étanchéité (18) comprend un matériau présentant une température de fusion qui ne dépasse pas 250° C.

6. Générateur de gaz selon la revendication 4 ou 5, **caractérisé en ce que** l'élément d'étanchéité (18) comprend une matière plastique, en particulier un polypropylène ou un polyamide.

7. Générateur de gaz selon la revendication 6, **caractérisé en ce que** la matière plastique comprend des fibres de verre.

8. Procédé pour influencer un écoulement de gaz dans un générateur de gaz, comprenant les étapes suivantes :
- on fournit un générateur de gaz présentant un boîtier extérieur (1), une chambre intérieure (2) réalisée dans le boîtier extérieur (1) pour recevoir une substance de formation de gaz (12), une ouverture de sortie (16) pour l'écoulement sortant d'un gaz formé dans la chambre intérieure (2) hors du générateur de gaz, et une liaison d'écoulement entre la chambre intérieure (2) et l'ouverture de sortie (16), dans lequel au moins une partie de la section transversale de la liaison d'écoulement est fermée par un élément d'étanchéité (18), et
- on augmente la température d'une zone du générateur de gaz à laquelle est associé l'élément d'étanchéité (18), jusqu'à atteindre ou dépasser une température de déformation, ce qui entraîne la variation de la section transversale de la liaison d'écoulement,
- dans lequel la section transversale de la liaison d'écoulement est élargie suite à l'augmentation de la température,
- dans lequel la variation de la section transversale de la liaison d'écoulement entraîne la création d'un trajet d'écoulement supplémentaire entre la chambre intérieure (2) et l'ouverture de sortie (16),
**caractérisé en ce que**
- le trajet d'écoulement supplémentaire est réalisé de telle façon que le gaz qui s'écoule vers l'ouverture de sortie (16) sur le trajet d'écoulement supplémentaire subit un nombre de changements de direction plus faible que le gaz qui s'écoule sur un trajet d'écoulement existant avant la variation de la section transversale.
